# FASCICULE DE BREVET EUROPEEN

(11) **EP 4 515 091 B1**
(45) Date de publication et mention de la délivrance du brevet: **18.02.2026**
(21) Numéro de dépôt: 23720910.1
(22) Date de dépôt: 25.04.2023
(51) Int. Cl.: F02C 3/22, F02C 7/16, F02C 7/224, F02C 7/22, F02C 7/14, F02C 7/236

(54) **SYSTÈME DE CONDITIONNEMENT DE CARBURANT POUR ALIMENTER UNE TURBOMACHINE D'AÉRONEF, PROCÉDÉ D'ALIMENTATION D'UNE TURBOMACHINE**
BRENNSTOFFKONDITIONIERUNGSSYSTEM ZUR VERSORGUNG EINES FLUGZEUGTURBINENMOTORS UND VERFAHREN ZUR VERSORGUNG EINES TURBINENMOTORS
FUEL CONDITIONING SYSTEM FOR SUPPLYING AN AIRCRAFT TURBINE ENGINE, AND METHOD OF SUPPLYING A TURBINE ENGINE

(30) Priorité: 26.04.2022 FR 2203898
(43) Date de publication de la demande: 05.03.2025
(73) Titulaire: SAFRAN, 75015 Paris (FR)
(72) Inventeur: MAALOUF, Samer, 77550 MOISSY-CRAMAYEL (FR); LAMBERT, Pierre-Alain Marie Cyrille, 77550 MOISSY-CRAMAYEL (FR)
(74) Mandataire: Argyma
(86) Numéro de dépôt international: PCT/EP2023/060727
(87) Numéro de publication internationale: WO 2023/208884

(56) Documents cités:
- FR-A1- 2 503 256
- FR-A1- 3 110 938
- GB-A- 1 392 783
- US-A- 4 696 156

## Description

### Domaine technique

La présente invention concerne le domaine des aéronefs comportant des turbomachines alimentées par du carburant stocké dans un réservoir cryogénique.

Il est connu de stocker du carburant, en particulier de l'hydrogène, sous forme liquide pour limiter l'encombrement et la masse des réservoirs de l'aéronef. A titre d'exemple, le carburant est stocké à une température de l'ordre de -253 à -251°C (20 à 22 Kelvins) dans un réservoir cryogénique de l'aéronef.

Afin de pouvoir être injecté dans la chambre de combustion d'une turbomachine, le carburant doit être conditionné, c'est-à-dire pressurisé et chauffé, afin de permettre une combustion optimale. Un conditionnement est par exemple nécessaire pour réduire le risque de givrage/solidification de la vapeur d'eau contenue dans l'air qui circule dans la turbomachine, en particulier, au niveau des injecteurs de carburant de la turbomachine.

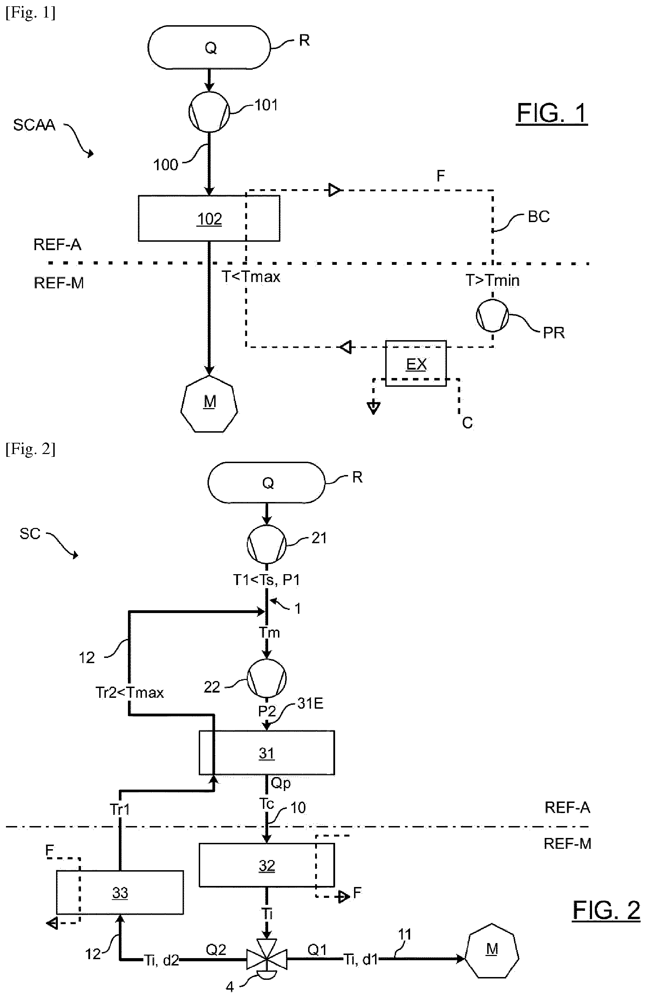

En référence à la [Fig.1], il est représenté un système de conditionnement SCAA selon l'art antérieur comprenant un circuit de carburant 100 relié en entrée à un réservoir cryogénique R et en sortie à la chambre de combustion d'une turbomachine M. De manière connue, le réservoir cryogénique R appartient à un référentiel de l'aéronef REF-A tandis que la turbomachine M appartient à un référentiel de la turbomachine REF-M. Un flux de carburant Q circulant d'amont en aval dans le circuit de carburant 100 traverse successivement une pompe mécanique 101 et un module de chauffage 102.

La pompe mécanique 101 est configurée pour faire circuler le flux de carburant Q dans le circuit de carburant 100. Le module de chauffage 102 est configuré pour apporter des calories au flux de carburant Q afin de le réchauffer pour qu'il puisse être injecté dans la turbomachine M.

En pratique, l'étape de chauffage de carburant nécessite de prélever des calories sur des sources chaudes de l'aéronef. A titre d'exemple, la chaleur générée par la turbomachine peut être utilisée (chaleur issue de l'huile de lubrification, calories en sortie de turbine, chaleur de la tuyère, etc.). La chaleur issue de l'aéronef peut également être utilisée (air issu de la cabine, chaleur issue de systèmes électriques ou électroniques, etc.).

A ce titre, on connait par exemple de la demande de brevet FR2005628A1, une architecture, également représentée sur la figure 1, dans laquelle un fluide caloporteur F traverse un échangeur de chaleur EX dans lequel il extrait les calories des sources chaudes C disponibles à bord de l'aéronef et est ensuite acheminé via une boucle de circulation BC vers le module de chaleur 102, pour chauffer le carburant Q. Cette boucle de circulation BC du fluide caloporteur F permet d'éviter le risque de contamination entre le carburant et un oxydant dans un échangeur thermique par exemple.

Cependant une telle architecture nécessite l'ajout d'une pompe de recirculation PR qui augmente de manière importante la masse dans l'aéronef. De plus, l'architecture présente une inertie thermique élevée qui entraine un chauffage long du carburant. La température du fluide caloporteur F dans la boucle de circulation BC doit également suivre une plage de variation prédéfinie. En effet, la température T en entrée du référentiel turbomachine REF-M doit être supérieure à une température minimale prédéterminée Tmin pour éviter tout risque de givrage des sources chaudes C par le fluide caloporteur F. D'autre part, à l'entrée du référentiel de l'aéronef REF-A, c'est-à-dire en sortie du référentiel turbomachine REF-M, la température T doit être inférieure à une température maximale Tmax prédéterminée pour respecter les règles du fabricant de l'aéronef afin de pouvoir acheminer en toute sécurité le fluide caloporteur F au plus près du réservoir R. Une telle limitation de la plage de températures entraine une augmentation du débit du fluide caloporteur dans la boucle de circulation qui entraine une augmentation du volume de circulation et donc l'utilisation de tuyauteries plus encombrantes et plus lourdes, ce qui n'est pas souhaitable dans un contexte aéronautique qui vise à réduire la masse des aéronefs.

L'invention vise ainsi à éliminer au moins certains de ces inconvénients en proposant un nouveau système de conditionnement de carburant permettant un chauffage qui soit efficace et fiable. Le système de conditionnement vise en particulier à limiter la masse et l'encombrement des tuyauteries de circulation des fluides, tout en s'assurant que la source chaude qui réchauffe le carburant ne givre pas. On connait du document GB1392783A une architecture dans laquelle un flux de carburant traverse successivement deux échangeurs de chaleur pour être réchauffé directement à partir d'un flux d'air d'alimentation de la turbomachine. Le flux de carburant est ensuite divisé en un premier flux de carburant pour alimenter la turbomachine et un deuxième flux de carburant réchauffé dans un échangeur de chaleur monté dans la turbomachine par la combustion du premier flux de carburant. Le deuxième flux de carburant permet de fournir de l'énergie pour entrainer une pompe pour la circulation du carburant.

### PRESENTATION DE L'INVENTION

Selon la revendication 1, l'invention concerne un système de conditionnement de carburant configuré pour alimenter une turbomachine d'aéronef à partir de carburant issu d'un réservoir cryogénique, le système de conditionnement étant défini dans un référentiel aéronef et un référentiel turbomachine, le réservoir cryogénique s'étendant dans le référentiel aéronef et la turbomachine s'étendant dans le référentiel turbomachine, le système de conditionnement comprenant :
- un circuit de carburant relié en entrée au réservoir cryogénique et en sortie à la turbomachine, un flux de carburant principal circulant d'amont en aval dans le circuit de carburant,
- au moins une première pompe mécanique montée sur le circuit de carburant dans le référentiel aéronef, la première pompe étant configurée pour élever la pression du flux de carburant principal dans le circuit de carburant jusqu'à une première pression,,
- au moins un premier échangeur de chaleur monté en aval de la première pompe mécanique, le premier échangeur de chaleur étant configuré pour chauffer le flux de carburant principal jusqu'à une température de circulation, le premier échangeur de chaleur étant monté dans le référentiel aéronef, le premier échangeur de chaleur comprenant une entrée de carburant,
- au moins une deuxième pompe mécanique, montée sur le circuit de carburant entre la première pompe mécanique et le premier échangeur de chaleur, la deuxième pompe mécanique étant configurée pour faire circuler le flux de carburant principal depuis le réservoir cryogénique d'amont en aval dans le circuit de carburant, la deuxième pompe mécanique étant configurée pour élever la pression du flux de carburant principal dans le circuit de carburant jusqu'à une deuxième pression supérieure à la première pression,
- au moins un deuxième échangeur de chaleur configuré pour chauffer le flux de carburant principal jusqu'à au moins une température d'injection, la température d'injection étant supérieure à la température de circulation, le deuxième échangeur de chaleur étant monté dans le référentiel turbomachine.

Le système de conditionnement est remarquable en ce qu'il comprend une vanne de distribution montée sur le circuit de carburant en aval du premier échangeur de chaleur dans le référentiel turbomachine, la vanne de distribution étant configurée pour diviser le circuit de carburant en :
- une branche d'alimentation montée entre la vanne de distribution et la turbomachine, et
- une branche de recirculation montée entre la vanne de distribution et l'entrée de carburant du premier échangeur de chaleur via ledit premier échangeur de chaleur,
- la vanne de distribution étant configurée pour diviser le flux de carburant principal en un flux de carburant direct configuré pour circuler dans la branche d'alimentation et alimenter la turbomachine, et un flux de carburant recirculé, configuré pour circuler dans la branche de recirculation de manière à réchauffer le flux de carburant principal dans le premier échangeur de chaleur jusqu'à la température de circulation au moyen du flux de carburant recirculé à une température supérieure ou égale à la température d'injection.

Le système de conditionnement selon l'invention permet avantageusement de réchauffer le flux de carburant principal à partir d'une partie de ce même flux de carburant. Plus précisément, grâce à la vanne de distribution, le système de conditionnement selon l'invention permet de ne recirculer qu'une fraction du flux de carburant chauffé par le premier échangeur de chaleur, tout en permettant à une deuxième partie du flux de carburant d'être directement acheminée vers la turbomachine. Le flux de carburant à l'état liquide en sortie du réservoir cryogénique peut être réchauffé dans le référentiel aéronef avant d'être acheminé vers la turbomachine, ce qui permet de s'affranchir de l'installation de conduites de circulation de carburant particulières entre le référentiel aéronef et le référentiel turbomachine qui nécessiteraient une isolation spécifique pour faire circuler un flux de carburant cryogénique.

La première pompe mécanique permet d'élever la pression du flux de carburant suffisamment pour que celui-ci subisse un sous-refroidissement lui permettant avantageusement de ne pas être à la saturation liquide en entrée de la deuxième pompe mécanique, comme cela était le cas en sortie de réservoir, ce qui permet d'éviter tout risque d'endommagement de la deuxième pompe mécanique, correspondant à la pompe principale.

Dans une forme de réalisation, la vanne de distribution est montée en aval du deuxième échangeur de chaleur pour permettre en sortie de la vanne de distribution à la fois au flux de carburant recirculé d'être directement acheminé pour réchauffer le flux de carburant principal et au flux de carburant direct d'être directement acheminé vers la turbomachine.

De manière alternative, la vanne de distribution est montée directement en aval du premier échangeur de chaleur, en particulier, en amont du deuxième échangeur de chaleur. Une telle forme de réalisation permet avantageusement de régler les températures dans la branche d'alimentation et dans la branche de recirculation de manière indépendante.

De manière préférée, le flux de carburant direct circulant dans la branche d'alimentation présentant un premier débit, le flux de carburant recirculé circulant dans la branche de recirculation présente un deuxième débit compris entre 5% et 25% du premier débit du flux de carburant direct. De manière avantageuse, une grande partie du flux de carburant est directement acheminée vers la turbomachine pour l'alimenter, ce qui permet un rendement efficace du système de conditionnement, tout en permettant d'éviter l'utilisation de longues conduites cryogéniques entre le référentiel aéronef et le référentiel moteur.

Dans une forme de réalisation préférée, la première pression du flux de carburant permettant une élévation de la température dudit flux de carburant jusqu'à une température primaire, le flux de carburant ayant une température de saturation à la première pression, la température primaire est inférieure à la température de saturation à la première pression. Une telle température à une même pression permet un sous-refroidissement du flux de carburant qui est comprimé, ce qui permet de s'assurer que le carburant est à l'état liquide en sortie de la pompe mécanique. Grâce à une telle forme de réalisation, le mélange du flux de carburant principal avec le flux de carburant recirculé est à l'état liquide permettant avantageusement de limiter tout risque d'endommagement de la deuxième pompe mécanique.

Dans une forme de réalisation, le système de conditionnement comprend un troisième échangeur de chaleur monté sur la branche de recirculation entre la vanne de redistribution et le premier échangeur de chaleur, de manière à augmenter la température du flux de carburant recirculé au-delà de la température d'injection, le troisième échangeur de chaleur étant monté dans le référentiel turbomachine.

Dans une forme de réalisation, le système de conditionnement comprend une vanne de détente montée sur la branche de recirculation entre le premier échangeur de chaleur et la première pompe mécanique, de manière à ce que le flux de carburant recirculé circulant dans la branche de recirculation présente une pression similaire à la pression du flux de carburant sur le circuit de carburant entre la première pompe mécanique et le premier échangeur de chaleur. La vanne de détente permet de détendre le flux de carburant jusqu'à la première pression de sortie de la première pompe mécanique de manière à pouvoir mélanger le flux de carburant recirculé avec le flux de carburant principal issu du réservoir cryogénique, le flux de carburant recirculé étant liquide.

De manière préférée, la vanne de détente est une vanne à détente Joule-Thomson isenthalpique.

Dans une forme de réalisation, le circuit de carburant entre le premier échangeur de chaleur et le deuxième échangeur de chaleur comprend un premier conduit de circulation du flux de carburant principal et un deuxième conduit de circulation du flux de carburant recirculé, le premier conduit et le deuxième conduit se présentant chacun sous la forme d'un cylindre, le premier conduit et le deuxième conduit étant concentriques, le deuxième conduit s'étend radialement extérieurement au premier conduit, de manière à réchauffer le flux de carburant principal en sortie du premier échangeur de chaleur par le flux de carburant recirculé.

Une telle tuyauterie double parois permet avantageusement des échanges thermiques optimaux entre le flux de carburant principal froid et le flux de carburant recirculé chaud. En outre, une configuration tubulaire double parois permet de s'affranchir d'un risque de fuite du flux de carburant froid. En cas d'endommagement du circuit de carburant, le flux de carburant froid circulant dans le premier conduit se retrouve dans le deuxième conduit.

Une tuyauterie double parois permet également de réduire la taille du premier échangeur de chaleur en continuant le réchauffement du flux de carburant principal après sa sortie du premier échangeur de chaleur. Dans une forme de réalisation, une telle configuration permet de limiter l'utilisation du premier échangeur de chaleur pendant certaines phases du vol, pendant lesquelles le besoin en carburant est moins importante, par exemple en phase de ralentissement de l'aéronef.

De manière préférée, le flux de carburant principal dans le premier conduit et le flux de carburant recirculé dans le deuxième conduit circulent suivant des sens de courant opposés.

De préférence, les surfaces du premier conduit, interne au deuxième conduit, comprennent des rainures ou des ailettes pour favoriser les échanges thermiques entre les deux flux de carburant.

Dans une forme de réalisation, la paroi externe du deuxième conduit comporte une isolation multicouche, de manière à minimiser les pertes thermiques vers l'ambiant.

Dans une forme de réalisation, le circuit de carburant comprend un troisième conduit, le troisième conduit étant monté radialement extérieurement au deuxième conduit de manière à permettre la détection d'une fuite du flux de carburant recirculé et/ou du flux de carburant principal.

Dans une forme de réalisation, le circuit de carburant comprend un conduit intermédiaire, le conduit intermédiaire étant monté entre le premier conduit et le deuxième conduit, le conduit intermédiaire étant sensiblement sous vide, de manière à permettre la détection de fuites du flux de carburant initial et/ou du flux de carburant recirculé.

De préférence, les surfaces d'échanges entre le premier conduit, respectivement le deuxième conduit, et le conduit intermédiaire comprennent des ailettes, permettant avantageusement de détecter facilement une fuite entre les deux flux tout en assurant un échange thermique entre le flux de carburant chaud et le flux de carburant froid.

Dans une forme de réalisation, le système de conditionnement comprend une troisième pompe mécanique, montée sur la branche de recirculation, la troisième pompe étant configurée pour faire circuler le flux de carburant recirculé dans la branche de recirculation depuis la vanne de distribution jusqu'au le circuit de carburant. Une telle troisième pompe mécanique permet de réinjecter le flux de carburant recirculé dans le circuit de carburant en aval de la deuxième pompe.

L'invention porte également sur un aéronef comprenant un réservoir cryogénique, une turbomachine et un système de conditionnement tel que décrit précédemment.

Enfin, selon la revendication 11, l'invention concerne un procédé d'alimentation en carburant d'une turbomachine d'aéronef à partir de carburant issu d'un réservoir cryogénique au moyen d'un système de conditionnement tel que décrit précédemment, un flux de carburant circulant d'amont en aval dans le circuit de carburant reliant en entrée le réservoir cryogénique et en sortie la turbomachine, le procédé comprenant des étapes consistant à :
- Chauffer le flux de carburant principal, dans le premier échangeur de chaleur dans le référentiel aéronef, jusqu'à au moins la température de circulation,
- Acheminer le flux de carburant principal vers le référentiel turbomachine,
- Diviser le flux de carburant principal en un flux de carburant direct et un flux de carburant recirculé,
- Diriger le flux de carburant recirculé vers le premier échangeur de chaleur, de manière à ce que le premier échangeur de chaleur prélève des calories dans le flux de carburant recirculé ayant au moins la température d'injection pour réchauffer le flux de carburant principal jusqu'à la température de circulation.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'un système de conditionnement selon l'art antérieur.
La [Fig.2] est une représentation schématique d'un système de conditionnement selon une forme de réalisation de l'invention.
La [Fig.3] est une représentation schématique d'un système de conditionnement selon une deuxième forme de réalisation de l'invention.
La [Fig.4] est une représentation schématique d'un système de conditionnement comprenant un circuit de carburant comprenant une double paroi.
La [Fig.5] est une vue en coupe du circuit de carburant à double paroi de la [Fig.4], selon une première forme de réalisation.
La [Fig.6] est une vue en coupe du circuit de carburant à double paroi de la [Fig.4], selon une deuxième forme de réalisation.
La [Fig.7] est une représentation schématique d'un système de conditionnement selon une troisième forme de réalisation de l'invention.
La [Fig.8] est un schéma des étapes d'un procédé d'alimentation en carburant selon un mode de mise en œuvre de l'invention.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

En référence à la [Fig.2], il est représenté un système de conditionnement de carburant SC configuré pour alimenter une turbomachine M d'aéronef à partir de carburant Q issu d'un réservoir cryogénique R. La turbomachine M est configurée pour assurer la propulsion de l'aéronef, notamment, par entrainement d'au moins un organe propulsif (non représenté sur la [Fig.2]). Dans cet exemple, le carburant Q est de l'hydrogène liquide mais l'invention s'applique à d'autres types de carburant, par exemple, du méthane liquide ou du gaz naturel liquéfié.

Dans cet exemple, le carburant Q dans le réservoir cryogénique R est stocké à une température de l'ordre de -253 à -251°C (20 à 22 Kelvins). A cette température, le flux de carburant Q est liquide.

Le système de conditionnement SC est défini dans un référentiel aéronef REF-A et dans un référentiel turbomachine REF-M. Le réservoir cryogénique R s'étend dans le référentiel aéronef REF-A tandis que la turbomachine M s'étend dans le référentiel turbomachine REF-M.

En référence à la [Fig.2], le système de conditionnement SC selon l'invention comprend un circuit de carburant 1 (trait continu sur la [Fig.2]) relié en entrée au réservoir cryogénique R et en sortie à la turbomachine M. Un flux de carburant Q circule d'amont en aval dans le circuit de carburant 1. Par la suite les termes « amont » et « aval » sont définis par rapport au sens de circulation du flux de carburant Q d'amont en aval.

Selon l'invention, le système de conditionnement SC comporte une première pompe mécanique 21, de préférence haute pression. La première pompe mécanique 21 est de préférence montée dans le référentiel aéronef REF-A, c'est-à-dire au plus proche du réservoir cryogénique R.

La première pompe mécanique 21 est configurée pour élever la pression du flux de carburant Q issu du réservoir cryogénique R dans le circuit de carburant 1 jusqu'à une première pression P1 permettant une élévation de la température du flux de carburant Q jusqu'à une température primaire T1. De préférence, le flux de carburant Q ayant une température de saturation Ts à la première pression P1, la température primaire T1 est inférieure à la température de saturation Ts à la première pression P1. Dans cet exemple dans lequel le carburant Q est de l'hydrogène liquide, la température de saturation Ts est comprise entre -253°C (20K) et -250°C (23K).

La première pompe mécanique 21 permet ainsi un sous-refroidissement du flux de carburant Q, ce qui permet pour la première pression P1, de s'assurer que le flux de carburant Q ne soit pas à la saturation liquide, comme cela est le cas en sortie du réservoir cryogénique R. A titre d'exemple, en sortie de la première pompe mécanique 21, le flux de carburant Q est à une température de -251°C (22,6K) pour une pression de 5 bar. Pour une telle pression, le température de saturation Ts de l'hydrogène est de -246°C (27K). Ainsi la première pompe mécanique 21 permet de s'assurer que le carburant Q est à l'état liquide en sortie de la première pompe mécanique 21 et qu'aucune particule de vapeur ne risque d'entrer dans la deuxième pompe mécanique 22.

De préférence, la première pompe mécanique 21 est une pompe adaptée pour accepter en entrée un mélange de carburant à la saturation liquide en sortie réservoir R.

Selon l'invention, comme représenté sur la [Fig.2], le système de conditionnement SC comprend une deuxième pompe mécanique 22, montée dans le circuit de carburant 1 en aval de la première pompe mécanique 21. La deuxième pompe mécanique 22 correspond à la pompe principale du circuit de carburant 1 et est configurée pour faire circuler le flux de carburant Q d'amont en aval dans le circuit de carburant 1. La deuxième pompe mécanique 22 est configurée pour élever la pression du flux de carburant principal Qp dans le circuit de carburant 1 jusqu'à une deuxième pression P2, supérieure à la première pression P1. Dans cet exemple, la deuxième pression P2 est comprise entre 8 à 60 bars.

Toujours en référence à la [Fig.2], le système de conditionnement SC comprend un premier échangeur de chaleur 31, monté dans le circuit de carburant 1, configuré pour transmettre des calories au flux de carburant Q afin de le réchauffer pour permettre son injection de manière optimale dans la turbomachine M.

Le premier échangeur de chaleur 31 est un échangeur de type carburant/carburant étant donné qu'il permet de chauffer un flux de carburant froid avec un flux de carburant chaud qui aura été préalablement réchauffé comme cela sera décrit plus en détails par la suite. Plus précisément, le premier échangeur de chaleur 31 est configuré pour réchauffer le flux de carburant Q au moyen d'un flux de carburant recirculé Q2 chauffé, comme cela sera décrit plus en détails par la suite. De préférence, dans le premier échangeur de chaleur 31, le flux de carburant Q et le flux de carburant recirculé Q2 circulent selon des sens de circulations opposés. Il va de soi que les flux pourraient circuler selon des sens de circulation similaires. L'utilisation d'un échangeur du type carburant/carburant permet avantageusement d'éviter tout risque de givrage/solidification d'un fluide caloporteur.

Dans cet exemple, le premier échangeur de chaleur 31 est un échangeur de chaleur tubulaire ou à plaques. Les surfaces d'échange de chaleur dans le premier échangeur de chaleur 31 comportent, dans une forme de réalisation, des organes d'échange supplémentaires, tels que des ailettes par exemple, afin d'améliorer les performances aérothermiques globales de l'échangeur de chaleur.

De préférence, le premier échangeur de chaleur 31 est monté, dans le circuit de carburant 1, dans le référentiel aéronef REF-A, c'est-à-dire proche du réservoir cryogénique R, en aval de la première pompe mécanique 21. Le premier échangeur de chaleur 31 comprend une entrée de carburant 31E, représentée sur la [Fig.2].

Le premier échangeur de chaleur 31 est configuré pour chauffer le flux de carburant Q jusqu'à une température de circulation Tc, supérieure à la température primaire T1 et à la température de vaporisation du carburant Q. Dans cet exemple, pour de l'hydrogène, la température de circulation Tc est supérieure à -208°C (65K), de préférence comprise entre -173 et -123 °C (100 et 150K). Ainsi le flux de carburant Q en sortie (c'est-à-dire en aval) du premier échangeur de chaleur 31 est uniquement à l'état gazeux.

Le premier échangeur de chaleur 31 permet, dans le référentiel aéronef REF-A, de réchauffer le flux de carburant Q avant que celui-ci ne circule jusqu'au référentiel turbomachine REF-M, ce qui permet de s'affranchir de l'utilisation de tuyauteries particulières qui comprendraient une isolation spécifique pour résister aux températures d'un carburant Q cryogénique, entre le premier échangeur de chaleur 31 (dans le référentiel aéronef REF-A) et le deuxième échangeur de chaleur 32 (monté dans le référentiel turbomachine REF-M).

Le premier échangeur de chaleur 31 permet aussi de réduire la température du flux de carburant recirculé Q2 (comme cela sera décrit plus en détails par la suite) afin qu'il puisse atteindre le voisinage du réservoir R tout en respectant les préconisations de sécurité du fabricant d'aéronef qui impose une température de fluide inférieure à une température maximale prédéterminée Tmax.

Selon l'invention, le système de conditionnement SC comprend une vanne de distribution 4, montée dans le circuit de carburant 1 en aval du premier échangeur de chaleur 31, dans le référentiel turbomachine REF-M.

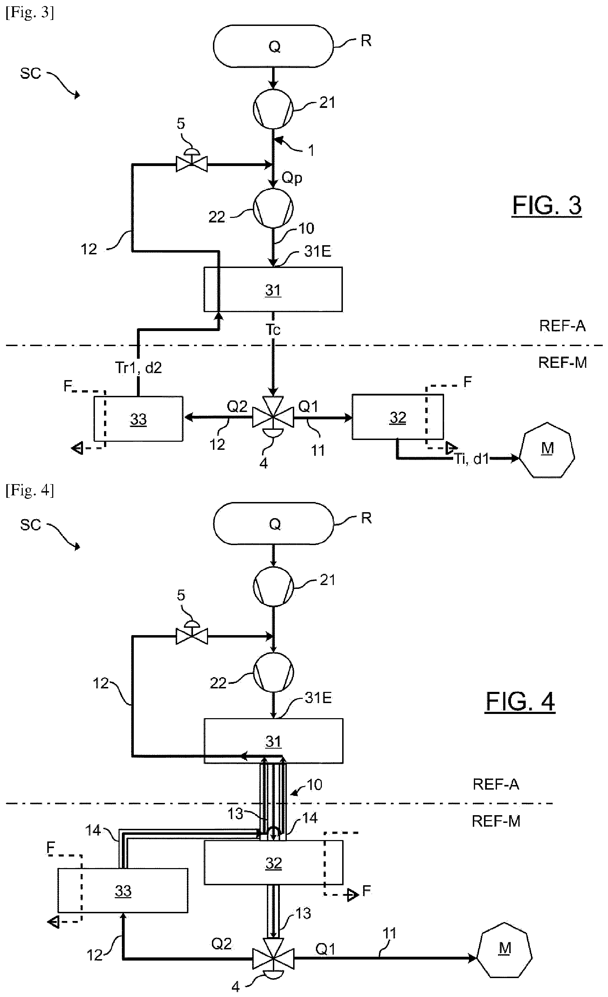

Dans une première forme de réalisation, représentée sur la [Fig.2], la vanne de distribution 4 est montée en aval d'un deuxième échangeur de chaleur 32, qui sera décrit plus en détails par la suite. Dans une deuxième forme de réalisation, représentée sur la [Fig.3], la vanne de distribution 4 est montée sur le circuit de carburant 1 directement en aval du premier échangeur de chaleur 31.

Par souci de clarté, le flux de carburant Q en amont de la vanne de distribution 4 sera désigné par la suite « flux de carburant principal Qp ».

Selon l'invention, la vanne de distribution 4 est configurée pour diviser le circuit de carburant 1 en une branche d'alimentation 11 montée entre la vanne de distribution 4 et la turbomachine M et une branche de recirculation 12 montée entre la vanne de distribution 4 et l'entrée de carburant 31E du premier échangeur de chaleur 31 via ledit premier échangeur de chaleur 31. Aussi, comme représenté sur la [Fig.2], la vanne de distribution 4 est configurée pour diviser le flux de carburant principal Qp en :
- un flux de carburant direct Q1 configuré pour circuler dans la branche d'alimentation 11 et alimenter la turbomachine M, et
- un flux de carburant recirculé Q2, configuré pour circuler dans la branche de recirculation 12.

Grâce à la vanne de distribution 4 et à la branche de recirculation 12, le flux de carburant principal Qp est réchauffé dans le premier échangeur de chaleur 31 jusqu'à la température de circulation Tc au moyen du flux de carburant recirculé Q2 dont la température aura été préalablement élevée, comme cela sera décrit plus en détails par la suite. Ainsi, seule une fraction du flux de carburant principal Qp est redirigée, depuis le référentiel turbomachine REF-M vers le référentiel aéronef REF-A, vers le premier échangeur de chaleur 31, permettant au reste du flux de carburant principal Qp d'être directement acheminé dans la turbomachine M.

Dans une forme de réalisation préférée, le flux de carburant direct Q1 présentant un premier débit d1 et le flux de carburant recirculé Q2 présentant un deuxième débit d2, le deuxième débit d2 est compris entre 5% et 25% du premier débit d1 du flux de carburant direct Q1.

De manière préférée, la branche de recirculation 12 débouche dans le circuit de carburant 1 entre les deux pompes mécaniques 21, 22.

Comme représenté sur les figures 2 et 3, le système de conditionnement SC selon l'invention comprend également un deuxième échangeur de chaleur 32, monté en aval du premier échangeur de chaleur 31, dans le référentiel turbomachine REF-M. Le deuxième échangeur de chaleur 32 est de préférence un échangeur de chaleur dans lequel circule un fluide caloporteur F pour apporter des calories au flux de carburant Q qui est à l'état gazeux. Le fluide caloporteur F ne présente ainsi pas de risque de givrage, étant donné que le flux de carburant Q est à l'état gazeux à une température supérieure à la température de vaporisation.

Dans cet exemple, le fluide caloporteur F peut être de différentes natures, par exemple, un gaz ou un liquide, en particulier, de l'air, de l'huile issue de la turbomachine M, des gaz chauds en sortie de turbine basse pression, du dioxyde de carbone ou de l'azote.

Dans une première forme de réalisation, en référence à la [Fig.2], le deuxième échangeur de chaleur 32 est monté sur le circuit de carburant 1 entre le premier échangeur de chaleur 31 et la vanne de distribution 4. Le deuxième échangeur de chaleur 32 est alors configuré pour chauffer le flux de carburant principal Qp jusqu'à une température d'injection Ti, la température d'injection Ti étant supérieure à la température de circulation Tc. Dans cet exemple, la température d'injection Ti est comprise entre-73 et 127°C (200 et 400K). Le flux de carburant principal Qp est configuré pour traverser le vanne de distribution 4 à la température d'injection Ti. En sortie de la vanne de distribution 4, le flux de carburant direct Q1, alors à la température d'injection Ti, est configuré pour être acheminé directement dans la branche d'alimentation 11 pour être dirigé vers la turbomachine M. Le flux de carburant recirculé Q2, également à la température d'injection Ti, est configuré pour être acheminé vers le premier échangeur de chaleur 31 via la branche de recirculation 12.

Dans une deuxième forme de réalisation, en référence à la [Fig.3], le deuxième échangeur de chaleur 32 est monté sur la branche d'alimentation 11 du circuit d'alimentation 1. Le flux de carburant principal Qp est configuré pour traverser le vanne de distribution 4 à la température de circulation Tc. En sortie de la vanne de distribution 4, le flux de carburant direct Q1, alors à la température de circulation Tc, est configuré pour être acheminé, via la branche d'alimentation 11, dans le deuxième échangeur de chaleur 32, lui-même configuré pour chauffer le flux de carburant direct Q1 jusqu'à la température d'injection Ti. Le flux de carburant recirculé Q2, à la température de circulation Tc, est configuré pour être acheminé dans la branche de recirculation 12.

Une telle forme de réalisation permet avantageusement de régler la température dans la branche d'alimentation 11 et la température dans la branche de recirculation 12 de manière indépendante, ce qui est avantageux pour optimiser le système de conditionnement en fonction des conditions de fonctionnement.

Dans cette forme de réalisation, toujours en référence à la [Fig.3], le système de conditionnement SC comprend, de préférence, un troisième échangeur de chaleur 33, monté sur la branche de recirculation 12 entre la vanne de distribution 4 et le premier échangeur de chaleur 31. Le troisième échangeur de chaleur 33 peut être monté soit dans le référentiel turbomachine REF-M, soit dans le référentiel aéronef REF-A.

Le troisième échangeur de chaleur 33 est configuré pour réchauffer le flux de carburant recirculé Q2 jusqu'à une première température de recirculation Tr1, supérieure ou égale à la température d'injection Ti, au moyen d'un fluide caloporteur F. Une telle première température de recirculation Tr1 permet de réchauffer efficacement le flux de carburant principal Qp dans le premier échangeur de chaleur 31 en lui transférant suffisamment de calories pour qu'il chauffe jusqu'à la température de circulation Tc et qu'il soit uniquement à l'état gazeux en sortie du premier échangeur de chaleur 31. Dans cet exemple, la première température de recirculation Tr1 est comprise entre 77 et 227°C (350 et 500K).

Après avoir traversé le premier échangeur de chaleur 31 et avoir transféré des calories au flux de carburant principal Qp, le flux de carburant recirculé Q2 est configuré pour être refroidi jusqu'à une deuxième température de recirculation Tr2. Dans cet exemple, la deuxième température de recirculation Tr2 est comprise entre - 238 et -223 °C (35 et 50K). Le flux de carburant recirculé Q2 est configuré pour, en sortie du premier échangeur de chaleur 31, après avoir réchauffé le flux de carburant principal Qp, être mélangé au flux de carburant principal Qp, en amont du premier échangeur de chaleur 31, de manière à le réchauffer jusqu'à une température de mélange Tm, comme cela sera décrit plus en détails par la suite. De préférence, la température de mélange Tm, supérieure à la température primaire T1, permet de s'assurer que le mélange entre le flux de carburant recirculé Q2 et le flux de carburant principal Qp est à l'état liquide. Dans cet exemple, la température de mélange Tm est comprise entre -247 et -238°C (26 et 35K).

Dans la forme de réalisation dans laquelle le deuxième échangeur de chaleur 32 est monté entre le premier échangeur de chaleur 31 et la vanne de distribution 4, comme représentée sur la [Fig.2], le système de conditionnement SC comprend également de préférence un troisième échangeur de chaleur 33 monté dans la branche de recirculation 12 entre la vanne de distribution 4 et le premier échangeur de chaleur 31. Le troisième échangeur de chaleur 33 est alors configuré pour réchauffer le flux de carburant recirculé Q2 à la température d'injection Ti jusqu'à la première température de recirculation Tr1, supérieure à la température d'injection Ti.

Dans une forme de réalisation préférée, comme représenté sur la [Fig.4], le système de conditionnement SC comprend une vanne de détente 5 montée dans la branche de recirculation 12, de préférence entre le premier échangeur de chaleur 31 et le circuit de carburant 1. La vanne de détente 5 permet de détendre le flux de carburant recirculé Q2 jusqu'à la première pression P1 de sortie de la première pompe mécanique 21, de manière à pouvoir mélanger le flux de carburant recirculé Q2 avec le flux de carburant principal Qp issu du réservoir cryogénique R. Le flux de carburant recirculé Q2 est ainsi à l'état liquide en sortie de la vanne de détente 5.

De manière préférée, la vanne de détente 5 est une vanne à détente Joule-Thomson isenthalpique.

Le circuit de carburant 1 comporte des conduits d'interface 10 permettant le passage d'un référentiel à un autre, comme illustré à la [Fig.3].

Dans une forme de réalisation, en référence aux figures 4 à 6, un premier conduit d'interface 13 est formé par la conduite reliant le premier échangeur de chaleur 31 du référentiel aéronef REF-A à la vanne de distribution 4 du référentiel turbomachine REF-M. Un deuxième conduit d'interface 14 est formé par la conduite reliant le troisième échangeur de chaleur 33 du référentiel turbomachine REF-M au premier échangeur de chaleur 31 du référentiel aéronef REF-A.

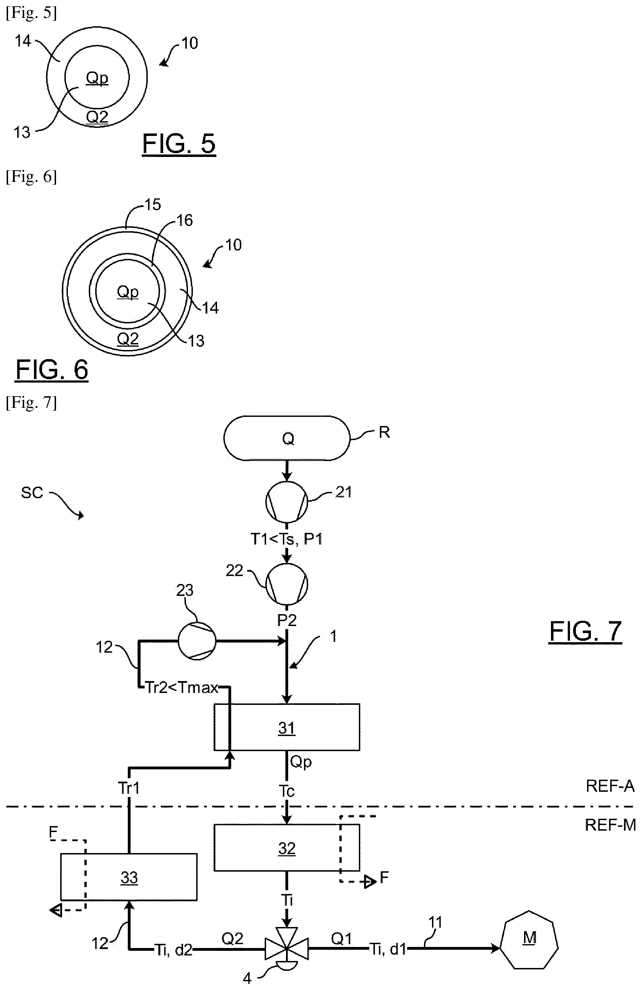

De préférence, le premier conduit d'interface 13 et le deuxième conduit d'interface 14 se présentent chacun sous la forme d'un cylindre et sont concentriques, comme représentés sur les figures 5 et 6. De préférence encore, le deuxième conduit 14, annulaire, s'étend radialement extérieurement au premier conduit 13, de manière à former une tuyauterie double parois et réchauffer le flux de carburant principal Qp en aval du premier échangeur de chaleur 31, jusqu'à la vanne de distribution 4 (ou jusqu'au deuxième échangeur de chaleur 32, suivant leurs positionnements), par le flux de carburant recirculé Q2.

De manière préférée, comme représenté sur la [Fig.4], le flux de carburant principal Qp et le flux de carburant recirculé Q2 circulent dans les conduits suivant des sens de circulation opposés.

Dans une forme de réalisation, la surface commune entre les deux conduits 13, 14 comprend des rainures ou des ailettes (non représentées) pour favoriser les échanges thermiques entre les deux flux de carburant Qp, Q2.

Dans une forme de réalisation, la paroi externe du deuxième conduit 14 comporte une isolation multicouche pour minimiser les pertes thermiques.

Dans une forme de réalisation, en référence à la [Fig.6], le circuit de carburant 1 comprend un troisième conduit 15, monté radialement extérieurement au deuxième conduit 14. De préférence, le troisième conduit 15 est configuré pour être placé sous vide et pour détecter un changement de pression, de manière à détecter une fuite du flux de carburant recirculé Q2 et/ou du flux de carburant principal Qp.

Dans une forme de réalisation, le circuit de carburant 1 comprend un conduit intermédiaire 16, monté entre le premier conduit 13 et le deuxième conduit 14. Le conduit intermédiaire 16 est de préférence placé sous vide, de manière à permettre la détection d'une fuite du flux de carburant principal Qp et/ou du flux de carburant recirculé Q2. De préférence, les surfaces d'échange entre le premier conduit 13, respectivement le deuxième conduit 14, et le conduit intermédiaire 16 comprennent des ailettes (non représentées), de manière à permettre de manière simple la détection d'une fuite entre les deux flux Qp, Q2 tout en assurant un échange thermique entre le flux de carburant recirculé Q2 chaud et le flux de carburant principal Qp froid.

Dans une forme de réalisation, le système de conditionnement SC comprend un échangeur haute pression (non représenté), monté dans le circuit de carburant 1 directement en aval du premier module de chaleur 31. De préférence, l'échangeur haute pression est monté dans le référentiel aéronef REF-A, de manière à récupérer la chaleur de l'aéronef, par exemple l'air en sortie cabine, les rejets thermiques issus de composants électriques et électroniques à bord, etc. L'échangeur de chaleur haute pression permet d'optimiser l'utilisation des sources de chaleur présentes à bord de l'aéronef.

Selon une variante de l'invention, le système de conditionnement SC comprend une vanne de recirculation (non représentée), montée dans le circuit de carburant 1. Dans une forme de réalisation, la vanne de recirculation est montée en aval du réservoir cryogénique R et permet de recirculer le flux de carburant Q dans le réservoir cryogénique R, par exemple en cas de débit faible. En effet, un débit faible peut entrainer une instabilité de la première pompe mécanique 31 qui n'est pas souhaitable. De manière analogue, la vanne de recirculation peut être montée de manière à permettre une recirculation du flux de carburant Q dans la deuxième pompe mécanique 22. Le débit du flux de carburant Q est ainsi plus élevé.

Dans une forme de réalisation, en référence à la [Fig.7], le système de conditionnement SC comprend une troisième pompe mécanique 23 montée dans le branche de recirculation 12 entre le premier échangeur de chaleur 31 et le circuit de carburant 1. La troisième pompe mécanique permet de s'assurer de la circulation du flux de carburant recirculé Q2 dans le branche de recirculation 12 et de son mélange avec le flux de carburant principal Qp, même à bas débit. Dans cette forme de réalisation, la branche de recirculation 12 débouche de préférence, dans le circuit de carburant 1 entre la deuxième pompe mécanique 22 et le premier échangeur de chaleur 31.De manière préférée, le flux de carburant recirculé Q2 est ainsi configuré pour être en sortie de la troisième pompe mécanique 33 à la pression P2 correspondant à la pression du flux de carburant principal Qp en sortie de la deuxième pompe mécanique 22 sur le circuit de carburant 1.

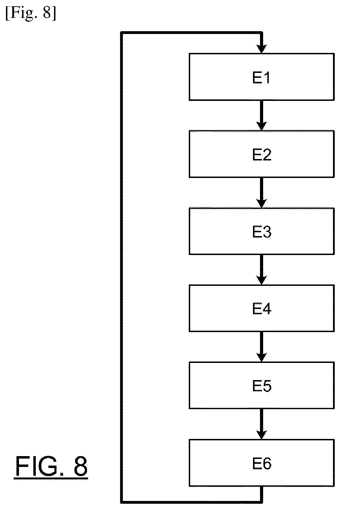

Il va dorénavant être présenté un procédé d'alimentation en carburant d'une turbomachine M selon un mode de mise en œuvre de l'invention, en référence à la [Fig.2] et à la [Fig.8]. Dans cet exemple, la première pompe mécanique 21 permet au flux de carburant Q d'être entièrement à l'état liquide en entrée de la deuxième pompe mécanique 22. La deuxième pompe mécanique 22 fait circuler le flux de carburant Q du réservoir cryogénique R dans le circuit de carburant 1 jusqu'à la turbomachine M. Dans cet exemple de mise en œuvre, le carburant Q est du dihydrogène et est stocké à l'état liquide dans le réservoir cryogénique R. Le carburant Q est initialement à une température comprise entre -248 et -243 °C (entre 25 et 30 K). Le fluide caloporteur F circulant dans le deuxième échangeur de chaleur 32 et le troisième échangeur de chaleur 33 est de l'azote.

Le procédé comprend une première étape E1 de chauffage du flux de carburant principal Qp dans le premier échangeur de chaleur 31, jusqu'à au moins la température de circulation Tc, dans cet exemple comprise entre -173°C (100K) et -123°C (150K). Un tel chauffage est réalisé dans le référentiel aéronef REF-A, au plus proche du réservoir cryogénique R.

Le flux de carburant principal Qp est à l'état gazeux en aval du premier échangeur de chaleur 31 et circule alors, dans une deuxième étape E2, dans le premier conduit d'interface 13 du circuit de carburant 1, depuis le référentiel aéronef REF-A jusqu'au référentiel turbomachine REF-M.

Le flux de carburant principal Qp est ensuite, dans cet exemple, chauffé dans le deuxième échangeur de chaleur 32 par le fluide caloporteur F, jusqu'à la température d'injection Ti, dans cet exemple comprise entre -23°C (250K) et 27°C (300K).

En sortie du deuxième échangeur de chaleur 32, le flux de carburant principal Qp à la température d'injection Ti traverse alors la vanne de distribution 4 et est divisé, dans une étape E3, en un flux de carburant direct Q1 et un flux de carburant recirculé Q2.

Dans une quatrième étape E4, le flux de carburant direct Q1 est acheminé via la branche d'alimentation 11 jusqu'à la turbomachine M pour l'alimenter. Dans cette même étape, le flux de carburant recirculé Q2 circule dans la branche de recirculation 12 et traverse, dans cet exemple, le troisième échangeur de chaleur 33 pour être chauffé jusqu'à la première température de recirculation Tr1, dans cet exemple supérieure à la température d'injection Ti et comprise entre 77°C (350K) et 227°C (500K). Le flux de carburant recirculé Q2 est ensuite acheminé, via la branche de recirculation 12, jusqu'au référentiel aéronef REF-A, où il est introduit dans le premier échangeur de chaleur 31, dans une étape E5, pour réchauffer le flux de carburant principal Qp jusqu'à la température de circulation Tc.

Le flux de carburant recirculé Q2, dont la température en sortie du premier échangeur de chaleur 31 a baissé jusqu'à la deuxième température de recirculation Tr2 (dans cet exemple comprise entre -238°C (35K) et -223°C (50K)) est alors acheminé, dans une étape E6, en amont du premier échangeur de chaleur 31 pour être mélangé avec le flux de carburant principal Qp. Le mélange de flux de carburant principal Qp et de flux de carburant recirculé Q2, à la température de mélange Tm comprise, dans cet exemple, entre -247°C (26K) et -238°C (35K), est alors introduit dans le premier échangeur de chaleur 31, pour être chauffé jusqu'à la température de circulation Tc.

Le procédé d'alimentation permet de chauffer le flux de carburant principal au moyen d'une fraction du flux de carburant chauffé à la température d'injection. Le premier échangeur de chaleur monté dans le référentiel aéronef permet de s'assurer que le flux de carburant est à une température suffisante pour être à l'état gazeux, ce qui permet de s'affranchir de tuyauteries comprenant une isolation spécifique.

## Revendications

1. Système de conditionnement (SC) de carburant configuré pour alimenter une turbomachine (M) d'aéronef à partir de carburant (Q) issu d'un réservoir cryogénique (R), le système de conditionnement (SC) étant défini dans un référentiel aéronef (REF-A) et un référentiel turbomachine (REF-M), le réservoir cryogénique (R) s'étendant dans le référentiel aéronef (REF-A) et la turbomachine (M) s'étendant dans le référentiel turbomachine (REF-M), le système de conditionnement (SC) comprenant :
• un circuit de carburant (1) relié en entrée au réservoir cryogénique (R) et en sortie à la turbomachine (M), un flux de carburant principal (Qp) circulant d'amont en aval dans le circuit de carburant (1),
• au moins une première pompe mécanique (21) montée sur le circuit de carburant (1) dans le référentiel aéronef (REF-A), la première pompe (21) étant configurée pour élever la pression du flux de carburant principal (Qp) dans le circuit de carburant (1) jusqu'à une première pression (P1),
• au moins un premier échangeur de chaleur (31) monté en aval de la première pompe mécanique (21), le premier échangeur de chaleur (31) étant configuré pour chauffer le flux de carburant principal (Qp) jusqu'à une température de circulation (Tc), le premier échangeur de chaleur (31) étant monté dans le référentiel aéronef (REF-A), le premier échangeur de chaleur (31) comprenant une entrée de carburant (31E), et
• au moins un deuxième échangeur de chaleur (32) configuré pour chauffer le flux de carburant principal (Qp) jusqu'à au moins une température d'injection (Ti), la température d'injection (Ti) étant supérieure à la température de circulation (Tc), le deuxième échangeur de chaleur (32) étant monté dans le référentiel turbomachine (REF-M),
• le système de conditionnement (SC) **caractérisé en ce qu'**il comprend: au moins une deuxième pompe mécanique (22), montée sur le circuit de carburant (1) entre la première pompe mécanique (21) et le premier échangeur de chaleur (31), la deuxième pompe mécanique (22) étant configurée pour faire circuler le flux de carburant principal (Qp) depuis le réservoir cryogénique (R) d'amont en aval dans le circuit de carburant (1), la deuxième pompe mécanique (22) étant configurée pour élever la pression du flux de carburant principal (Qp) dans le circuit de carburant (1) jusqu'à une deuxième pression (P2) supérieure à la première pression (P1), et une vanne de distribution (4) montée sur le circuit de carburant (1) en aval du premier échangeur de chaleur (31) dans le référentiel turbomachine (REF-M), la vanne de distribution (4) étant configurée pour diviser le circuit de carburant (1) en :
• une branche d'alimentation (11) montée entre la vanne de distribution (4) et la turbomachine (M), et
• une branche de recirculation (12) montée entre la vanne de distribution (4) et l'entrée de carburant (31E) du premier échangeur de chaleur (31) via ledit premier échangeur de chaleur (31),
• la vanne de distribution (4) étant configurée pour diviser le flux de carburant principal (Qp) en un flux de carburant direct (Q1) configuré pour circuler dans la branche d'alimentation (11) et alimenter la turbomachine (M), et un flux de carburant recirculé (Q2), configuré pour circuler dans la branche de recirculation (12) de manière à réchauffer le flux de carburant principal (Qp) dans le premier échangeur de chaleur (31), jusqu'à la température de circulation (Tc) au moyen du flux de carburant recirculé (Q2) à une température supérieure ou égale à la température d'injection (Ti).

2. Système de conditionnement (SC) selon la revendication 1, dans lequel la vanne de distribution (4) est montée en aval du deuxième échangeur de chaleur (32).

3. Système de conditionnement (SC) selon la revendication 1, dans lequel la vanne de distribution (4) est montée entre le premier échangeur de chaleur (31) et le deuxième échangeur de chaleur (32).

4. Système de conditionnement (SC) selon l'une des revendications 1 à 3, dans lequel, le flux de carburant direct (Q1) circulant dans la branche d'alimentation (11) présentant un premier débit (d1), le flux de carburant recirculé (Q2) circulant dans la branche de recirculation (12) présente un deuxième débit (d2) compris entre 5% et 25% du premier débit (d1) du flux de carburant direct (Q1).

5. Système de conditionnement (SC) selon l'une des revendications 1 à 4, dans lequel, la première pression (P1) du flux de carburant principal (Qp) permettant une élévation de la température dudit flux de carburant principal (Qp) jusqu'à une température primaire (T1), le flux de carburant (Q) ayant une température de saturation (Ts) à la première pression (P1), la température primaire (T1) est inférieure à la température de saturation (Ts) à la première pression (P1).

6. Système de conditionnement (SC) selon l'une des revendications 1 à 5, comprenant un troisième échangeur de chaleur (33) monté sur la branche de recirculation (12) entre la vanne de redistribution (4) et le premier échangeur de chaleur (31), de manière à augmenter la température du flux de carburant recirculé (Q2) au-delà de la température d'injection (Ti), le troisième échangeur de chaleur (33) étant monté dans le référentiel turbomachine (REF-M).

7. Système de conditionnement (SC) selon l'une des revendications 1 à 6, comprenant une vanne de détente (5) montée sur la branche de recirculation (12) entre le premier échangeur de chaleur (31) et la première pompe mécanique (21), de manière à ce que le flux de carburant recirculé (Q2) circulant dans la branche de recirculation (12) présente une pression similaire à la pression du flux de carburant (Q) sur le circuit de carburant (1) entre la première pompe mécanique (21) et le premier échangeur de chaleur (31).

8. Système de conditionnement (SC) selon l'une des revendications 1 à 7, dans lequel le circuit de carburant (1) entre le premier échangeur de chaleur (31) et le deuxième échangeur de chaleur (32) comprend un premier conduit (13) de circulation du flux de carburant principal (Qp) et un deuxième conduit (14) de circulation du flux de carburant recirculé (Q2), le premier conduit (13) et le deuxième conduit (14) se présentant chacun sous la forme d'un cylindre, le premier conduit (13) et le deuxième conduit (14) étant concentriques, le deuxième conduit (14) s'étend radialement extérieurement au premier conduit (13), de manière à réchauffer le flux de carburant principal (Qp) en sortie du premier échangeur de chaleur (31) par le flux de carburant recirculé (Q2).

9. Système de conditionnement (SC) selon l'une des revendications 1 à 8, comprenant une troisième pompe mécanique (23), montée sur la branche de recirculation 12, la troisième pompe (23) étant configurée pour faire circuler le flux de carburant recirculé (Q2) dans la branche de recirculation (12) depuis la vanne de distribution (4) jusqu'au circuit de carburant (1).

10. Aéronef comprenant un réservoir cryogénique, une turbomachine et un système de conditionnement selon l'une des revendications 1 à 9.

11. Procédé d'alimentation en carburant d'une turbomachine (M) d'aéronef à partir de carburant (Q) issu d'un réservoir cryogénique (R) au moyen d'un système de conditionnement (SC) selon l'une des revendications 1 à 9, un flux de carburant (Q) circulant d'amont en aval dans le circuit de carburant (1) reliant en entrée le réservoir cryogénique (R) et en sortie la turbomachine (M), le procédé comprenant des étapes consistant à :
• Chauffer le flux de carburant principal (Qp), dans le premier échangeur de chaleur (31) dans le référentiel aéronef (REF-A), jusqu'à au moins la température de circulation (Tc),
• Acheminer le flux de carburant principal (Qp) vers le référentiel turbomachine (REF-M),
• Diviser le flux de carburant principal (Qp) en un flux de carburant direct (Q1) et un flux de carburant recirculé (Q2),
• Diriger le flux de carburant recirculé (Q2) vers le premier échangeur de chaleur (31), de manière à ce que le premier échangeur de chaleur (31) prélève des calories dans le flux de carburant recirculé (Q2) ayant au moins la température d'injection (Ti) pour réchauffer le flux de carburant principal (Qp) jusqu'à la température de circulation (Tc).

## Patentansprüche

1. Treibstoffkonditionierungssystem (SC), das ausgelegt ist, um eine Flugzeugturbomaschine (M) mit Treibstoff (Q) aus einem Kryotank (R) zu versorgen, wobei das Konditionierungssystem (SC) in einem Flugzeug-Bezugssystem (REF-A) und einem Turbomaschinen-Bezugssystem (REF-M) definiert ist, wobei sich der Kryotank (R) im Flugzeug-Bezugssystem (REF-A) erstreckt und sich die Turbomaschine (M) im Turbomaschinen-Bezugssystem (REF-M) erstreckt, wobei das Konditionierungssystem (SC) umfasst:
• einen Treibstoffkreislauf (1), der am Eingang mit dem Kryotank (R) und am Ausgang mit der Turbomaschine (M) verbunden ist, wobei ein Haupt-Treibstoffstrom (Qp) von stromaufwärts nach stromabwärts im Treibstoffkreislauf (1) zirkuliert,
- mindestens eine erste mechanische Pumpe (21), die am Treibstoffkreislauf (1) im Flugzeug-Bezugssystem (REF-A) angebracht ist, wobei die erste Pumpe (21) ausgelegt ist, um den Druck des Haupt-Treibstoffstroms (Qp) im Treibstoffkreislauf (1) auf einen ersten Druck (P1) zu erhöhen,
• mindestens einen ersten Wärmetauscher (31), der stromabwärts der ersten mechanischen Pumpe (21) angebracht ist, wobei der erste Wärmetauscher (31) ausgelegt ist, um den Haupt-Treibstoffstrom (Qp) auf eine Zirkulationstemperatur (Tc) zu erwärmen, wobei der erste Wärmetauscher (31) im Flugzeug-Bezugssystem (REF-A) angebracht ist, wobei der erste Wärmetauscher (31) einen Treibstoffeinlass (31E) umfasst, und
• mindestens einen zweiten Wärmetauscher (32), der ausgelegt ist, um den Haupt-Treibstoffstrom (Qp) auf mindestens eine Einspritztemperatur (Ti) zu erwärmen, wobei die Einspritztemperatur (Ti) höher ist als die Zirkulationstemperatur (Tc), wobei der zweite Wärmetauscher (32) im Turbomaschinen-Bezugssystem (REF-M) angebracht ist,
• wobei das Konditionierungssystem (SC) **dadurch gekennzeichnet ist, dass** es umfasst: mindestens eine zweite mechanische Pumpe (22), die am Treibstoffkreislauf (1) zwischen der ersten mechanischen Pumpe (21) und dem ersten Wärmetauscher (31) angebracht ist, wobei die zweite mechanische Pumpe (22) ausgelegt ist, um den Haupt-Treibstoffstrom (Qp) vom Kryotank (R) von stromaufwärts nach stromabwärts im Treibstoffkreislauf (1) zirkulieren zu lassen, wobei die zweite mechanische Pumpe (22) ausgelegt ist, um den Druck des Haupt-Treibstoffstroms (Qp) im Treibstoffkreislauf (1) auf einen zweiten Druck (P2) zu erhöhen, der höher ist als der erste Druck (P1), und
ein Verteilerventil (4), das am Treibstoffkreislauf (1) stromabwärts des ersten Wärmetauschers (31) im Turbomaschinen-Referenzsystem (REF-M) angebracht ist, wobei das Verteilerventil (4) ausgelegt ist, um den Treibstoffkreislauf (1) aufzuteilen in:
• einen Versorgungszweig (11), der zwischen dem Verteilerventil (4) und der Turbomaschine (M) angebracht ist, und
• einen Rezirkulationszweig (12), der zwischen dem Verteilerventil (4) und dem Treibstoffeinlass (31E) des ersten Wärmetauschers (31) über den ersten Wärmetauscher (31) angebracht ist,
• wobei das Verteilerventil (4) ausgelegt ist, um den Haupt-Treibstoffstrom (Qp) in einen direkten Treibstoffstrom (Q1), der ausgelegt ist, um im Versorgungszweig (11) zu zirkulieren und die Turbomaschine (M) zu versorgen, und in einen rezirkulierten Treibstoffstrom (Q2) aufzuteilen, der ausgelegt ist, um im Rezirkulationszweig (12) derart zu zirkulieren, dass der Haupt-Treibstoffstrom (Qp) im ersten Wärmetauscher (31) mittels des rezirkulierten Treibstoffstroms (Q2) mit einer Temperatur, die größer oder gleich der Einspritztemperatur (Ti) ist, auf die Zirkulationstemperatur (Tc) zu erwärmen.

2. Konditionierungssystem (SC) nach Anspruch 1, wobei das Verteilerventil (4) stromabwärts des zweiten Wärmetauschers (32) angebracht ist.

3. Konditionierungssystem (SC) nach Anspruch 1, wobei das Verteilerventil (4) zwischen dem ersten Wärmetauscher (31) und dem zweiten Wärmetauscher (32) angebracht ist.

4. Konditionierungssystem (SC) nach einem der Ansprüche 1 bis 3, wobei, wenn der im Versorgungszweig (11) zirkulierende direkte Treibstoffstrom (Q1) eine erste Durchflussmenge (d1) aufweist, der im Rezirkulationszweig (12) fließende rezirkulierte Treibstoffstrom (Q2) eine zweite Durchflussmenge (d2) aufweist, die zwischen 5 % und 25 % der ersten Durchflussmenge (d1) des direkten Treibstoffstroms (Q1) liegt.

5. Konditionierungssystem (SC) nach einem der Ansprüche 1 bis 4, wobei, wenn der erste Druck (P1) des Haupt-Treibstoffstroms (Qp) einen Anstieg der Temperatur des Haupt-Treibstoffstroms (Qp) auf eine Primärtemperatur (T1) ermöglicht, wobei der Treibstoffstrom (Q) beim ersten Druck (P1) eine Sättigungstemperatur (Ts) hat, die Primärtemperatur (T1) niedriger als die Sättigungstemperatur (Ts) beim ersten Druck (P1) ist.

6. Konditionierungssystem (SC) nach einem der Ansprüche 1 bis 5, umfassend einen dritten Wärmetauscher (33), der am Rezirkulationszweig (12) zwischen dem Verteilerventil (4) und dem ersten Wärmetauscher (31) derart angebracht ist, dass die Temperatur des rezirkulierten Treibstoffstroms (Q2) über die Einspritztemperatur (Ti) hinaus erhöht wird, wobei der dritte Wärmetauscher (33) im Turbomaschinen-Referenzsystem (REF-M) angebracht ist.

7. Konditionierungssystem (SC) nach einem der Ansprüche 1 bis 6, umfassend ein Entspannungsventil (5), das am Rezirkulationszweig (12) zwischen dem ersten Wärmetauscher (31) und der ersten mechanischen Pumpe (21) derart angebracht ist, dass der im Rezirkulationszweig (12) zirkulierende rezirkulierte Treibstoffstrom (Q2) einen ähnlichen Druck wie der Druck des Treibstoffstroms (Q) am Treibstoffkreislauf (1) zwischen der ersten mechanischen Pumpe (21) und dem ersten Wärmetauscher (31) aufweist.

8. Konditionierungssystem (SC) nach einem der Ansprüche 1 bis 7, wobei der Treibstoffkreislauf (1) zwischen dem ersten Wärmetauscher (31) und dem zweiten Wärmetauscher (32) eine erste Zirkulationsleitung (13) für den Haupt-Treibstoffstrom (Qp) und eine zweite Zirkulationsleitung (14) für den rezirkulierten Treibstoffstrom (Q2) umfasst, wobei die erste Leitung (13) und die zweite Leitung (14) jeweils die Form eines Zylinders haben, wobei die erste Leitung (13) und die zweite Leitung (14) konzentrisch sind, wobei sich die zweite Leitung (14) radial außerhalb der ersten Leitung (13) derart erstreckt, dass der Haupt-Treibstoffstrom (Qp) am Ausgang des ersten Wärmetauschers (31) durch den rezirkulierten Treibstoffstrom (Q2) erwärmt wird.

9. Konditionierungssystem (SC) nach einem der Ansprüche 1 bis 8, umfassend eine dritte mechanische Pumpe (23), die am Rezirkulationszweig 12 angebracht ist, wobei die dritte Pumpe (23) ausgelegt ist, damit der rezirkulierte Treibstoffstrom (Q2) im Rezirkulationszweig (12) vom Verteilerventil (4) zum Treibstoffkreislauf (1) zirkuliert.

10. Flugzeug, umfassend einen Kryotank, eine Turbomaschine und ein Konditionierungssystem nach einem der Ansprüche 1 bis 9.

11. Verfahren zur Treibstoffversorgung einer Flugzeugturbomaschine (M) mit Treibstoff (Q) aus einem Kryotank (R) mittels eines Konditionierungssystems (SC) nach einem der Ansprüche 1 bis 9, wobei ein Treibstoffstrom (Q) von stromaufwärts nach stromabwärts im Treibstoffkreislauf (1) zirkuliert, der am Einlass den Kryotank (R) und am Auslass die Turbomaschine (M) verbindet, wobei das Verfahren die folgenden Schritte umfasst:
• Erwärmen des Haupt-Treibstoffstroms (Qp) im ersten Wärmetauscher (31) im Flugzeug-Bezugssystem (REF-A) auf mindestens die Zirkulationstemperatur (Tc),
• Befördern des Haupt-Treibstoffstroms (Qp) zum Turbomaschinen-Bezugssystem (REF-M),
• Aufteilen des Haupt-Treibstoffstroms (Qp) in einen direkten Treibstoffstrom (Q1) und einen rezirkulierten Treibstoffstrom (Q2),
• Lenken des rezirkulierten Treibstoffstroms (Q2) zum ersten Wärmetauscher (31), so dass der erste Wärmetauscher (31) Wärme aus dem rezirkulierten Treibstoffstrom (Q2) mit mindestens der Einspritztemperatur (Ti) entnimmt, um den Haupt-Treibstoffstrom (Qp) auf die Zirkulationstemperatur (Tc) zu erwärmen.

## Claims

1. A fuel conditioning system (SC) configured to supply an aircraft turbine engine (M) with fuel (Q) from a cryogenic tank (R), the conditioning system (SC) being defined in an aircraft reference frame (REF-A) and a turbine engine reference frame (REF-M), the cryogenic tank (R) extending in the aircraft reference frame (REF-A) and the turbine engine (M) extending in the turbine engine reference frame (REF-M), the conditioning system (SC) comprising:
- a fuel circuit (1) connected at the inlet to the cryogenic tank (R) and at the outlet to the turbine engine (M), a main fuel flow (Qp) circulating from upstream to downstream in the fuel circuit (1),
- at least one first mechanical pump (21) mounted on the fuel circuit (1) in the aircraft reference frame (REF-A), the first pump (21) being configured to raise the pressure of the main fuel flow (Qp) in the fuel circuit (1) to a first pressure (P1),
- at least one first heat exchanger (31) mounted downstream of the first mechanical pump (21), the first heat exchanger (31) being configured to heat the main fuel flow (Qp) to a circulation temperature (Tc), the first heat exchanger (31) being mounted in the aircraft reference frame (REF-A), the first heat exchanger (31) comprising a fuel inlet (31E), and
- at least one second heat exchanger (32) configured to heat the main fuel flow (Qp) to at least one injection temperature (Ti), the injection temperature (Ti) being higher than the circulation temperature (Tc), the second heat exchanger (32) being mounted in the turbine engine reference frame (REF-M),
- the conditioning system (SC) **characterized in that** it comprises:
at least one second mechanical pump (22), mounted on the fuel circuit (1) between the first mechanical pump (21) and the first heat exchanger (31), the second mechanical pump (22) being configured to circulate the main fuel flow (Qp) from the cryogenic tank (R) from upstream to downstream in the fuel circuit (1), the second mechanical pump (22) being configured to raise the pressure of the main fuel flow (Qp) in the fuel circuit (1) to a second pressure (P2) higher than the first pressure (P1), and
a distribution valve (4) mounted on the fuel circuit (1) downstream of the first heat exchanger (31) in the turbine engine reference frame (REF-M). the distribution valve (4) being configured to divide the fuel circuit (1) into:
• a supply branch (11) mounted between the distribution valve (4) and the turbine engine (M), and
• a recirculation branch (12) mounted between the distribution valve (4) and the fuel inlet (31E) of the first heat exchanger (31) via said first heat exchanger (31),
• the distribution valve (4) being configured to divide the main fuel flow (Qp) into a direct fuel flow (Q1) configured to circulate in the supply branch (11) and supply the turbine engine (M), and a recirculated fuel flow (Q2), configured to circulate in the recirculation branch (12) so as to warm the main fuel flow (Qp) in the first heat exchanger (31) to the circulation temperature (Tc) by means of the recirculated fuel flow (Q2) at a temperature greater than or equal to the injection temperature (Ti).

2. The conditioning system (SC) according to claim 1, wherein the distribution valve (4) is mounted downstream of the second heat exchanger (32).

3. The conditioning system (SC) according to claim 1, wherein the distribution valve (4) is mounted between the first heat exchanger (31) and the second heat exchanger (32).

4. The conditioning system (SC) according to one of claims 1 to 3, wherein, the direct fuel flow (Q1) circulating in the supply branch (11) having a first flow rate (d1), the recirculated fuel flow (Q2) circulating in the recirculation branch (12) has a second flow rate (d2) of between 5% and 25% of the first flow rate (d1) of the direct fuel flow (Q1).

5. The conditioning system (SC) according to one of claims 1 to 4, wherein, the first pressure (P1) of the main fuel flow (Qp) allowing the temperature of said main fuel flow (Qp) to be raised to a primary temperature (T1), the fuel flow (Q) having a saturation temperature (Ts) at the first pressure (P1), the primary temperature (T1) is lower than the saturation temperature (Ts) at the first pressure (P1).

6. The conditioning system (SC) according to one of claims 1 to 5, comprising a third heat exchanger (33) mounted on the recirculation branch (12) between the redistribution valve (4) and the first heat exchanger (31), so as to increase the temperature of the recirculated fuel flow (Q2) above the injection temperature (Ti), the third heat exchanger (33) being mounted in the turbine engine reference frame (REF-M).

7. The conditioning system (SC) according to one of claims 1 to 6, comprising an expansion valve (5) mounted on the recirculation branch (12) between the first heat exchanger (31) and the first mechanical pump (21), so that the recirculated fuel flow (Q2) circulating in the recirculation branch (12) has a pressure similar to the pressure of the fuel flow (Q) on the fuel circuit (1) between the first mechanical pump (21) and the first heat exchanger (31).

8. The conditioning system (SC) according to one of claims 1 to 7, wherein the fuel circuit (1) between the first heat exchanger (31) and the second heat exchanger (32) comprises a first duct (13) for circulation of the main fuel flow (Qp) and a second duct (14) for circulation of the recirculated fuel flow (Q2), the first duct (13) and the second duct (14) each being in the form of a cylinder, the first duct (13) and the second duct (14) being concentric, the second duct (14) extending radially outside the first duct (13), so as to warm the main fuel flow (Qp) at the outlet of the first heat exchanger (31) by the recirculated fuel flow (Q2).

9. The conditioning system (SC) according to any one of claims 1 to 8, comprising a third mechanical pump (23), mounted on the recirculation branch (12), the third pump (23) being configured to circulate the recirculated fuel flow (Q2) in the recirculation branch (12) from the distribution valve (4) to the fuel circuit (1).

10. An aircraft comprising a cryogenic tank, a turbine engine and a conditioning system according to one of claims 1 to 9.

11. A method for supplying fuel to an aircraft turbine engine (M) from fuel (Q) coming from a cryogenic tank (R) by means of a conditioning system (SC) according to one of claims 1 to 9, a fuel flow (Q) circulating from upstream to downstream in the fuel circuit (1) connecting the cryogenic tank (R) at the inlet and the turbine engine (M) at the outlet, the method comprising steps consisting in:
- Heating the main fuel flow (Qp), in the first heat exchanger (31) in the aircraft reference frame (REF-A), to at least the circulation temperature (Tc),
- Conveying the main fuel flow (Qp) towards the turbine engine reference frame (REF-M),
- Dividing the main fuel flow (Qp) into a direct fuel flow (Q1) and a recirculated fuel flow (Q2),
- Directing the recirculated fuel flow (Q2) towards the first heat exchanger (31), so that the first heat exchanger (31) collects calories from the recirculated fuel flow (Q2) having at least the injection temperature (Ti) to warm the main fuel flow (Qp) up to the circulation temperature (Tc).
